# EUROPÄISCHE PATENTANMELDUNG

(11) **EP 0 894 463 A1**
(43) Veröffentlichungstag der Anmeldung: **03.02.1999**
(21) Anmeldenummer: 97113070.3
(22) Anmeldetag: 30.07.1997
(51) Int. Cl.: A47J 41/00

(54) **Isolierkanne und Deckel**

(71) Anmelder: MILKE, Siegfried, D-7550 Rastatt 17 (DE)
(72) Erfinder: Milke, Karin, 80339 München (DE)
(74) Vertreter: Hassler, Werner, Dr.

(57) **Zusammenfassung**

Eine Isolierkanne mit einem Kannenkörper aus einem Außenbehälter, einer Isolierschale innerhalb des Außenbehälters und einem Innenbehälter aus Edelstahl, der fest in den Außenbehälter einsetzbar ist, und mit einem Deckel, der den Behälterrand abschließt und einen Griff aufweist, bei dessen Niederdrükken der Deckel in eine angehobene Ausgießstellung gebracht wird Das technische Problem ist die Bereitstellung einer Isolierkanne, deren Kannenkörper leicht auseinandernehmbar ist und deren Deckel mit hoher Schließkraft abdichtend auf dem Kannenkörper sitzt. Der Innenbehälter (4) weist einen Gewindeabschnitt (14) auf, der in ein Gegengewinde (6) des Außenbehälters (1) eingreift, und mindestens ein Schraubensteg (19) am Kragen (18) des Deckels (17) wirkt mit einer Nase (10) am Hals (9) des Außenbehälters (1) zusammen.

## Beschreibung

Erfindung betrifft eine Isolierkanne mit einem Kannenkörper aus einem Außenbehälter, einer Isolierschale innerhalb des Außenbehälters und einem Innenbehälter aus Edelstahl, der fest in den Außenbehälter einsetzbar ist, und mit einem Deckel, der den Behälterrand abschließt und einen Griff aufweist, bei dessen Niederdrücken der Deckel in eine angehobene Ausgießstellung gebracht wird.

Eine Isolierkanne dieser Art ist in dem DE-U 92 12 614 beschrieben. Eine derartige Isolierkanne wird im Bereich der Gemeinschaftsverpflegung hauptsächlich in Krankenhäusern und Altenheimen eingesetzt. Die Isolierkanne ist circa 110 mm hoch, damit sie in üblichen Speisentransportsystemen eingesetzt werden kann. Die Teile des Kannenkörpers sind allerdings nicht oder nur mit hohem technischem Aufwand voneinander lösbar, so daß eine Reparatur der Kanne wirtschaftlich nicht sinnvoll ist. Der Deckel stellt eine Schwachstelle hinsichtlich der Wärmeisolierung dar.

Aufgabe der Erfindung ist die Bereitstellung einer Isolierkanne, deren Kannenkörper leicht auseinandernehmbar ist und deren Deckel mit hoher Schließkraft abdichtend auf dem Kannenkörper sitzt.

Diese Aufgabe wird nach der Erfindung dadurch gelöst, daß der Innenbehälter einen Gewindeabschnitt aufweist, der in ein Gegengewinde des Außenbehälters eingreift und daß mindestens ein Schraubensteg am Kragen des Deckels mit einer Nase am Hals des Außenbehälters zusammenwirkt.

Die Erfindung unterscheidet sich insofern vom Stand der Technik, als die ineinander geschraubten Teile des Kannenkörpers zu Reparatur- und Austauschzwecken leicht voneinander gelöst werden können. Der einem hohem Verschleiß unterliegende Außenbehälter kann ersetzt werden. Der mit einer Fingemulde versehene Deckel läßt sich mit einer Daumenbewegung durch eine geringe Drehung nach rechts oder links schraubend aufdem Kannenkörper festziehen, so daß eine hohe Abdichtung und damit Wärmeisolierung gesichert ist. Hierdurch wird auch die Transportsicherheit erhöht, da ein Austreten von Flüssigkeit verhindert ist.

Eine gute Wärmeisolierung erreicht man dadurch, daß ein Kragen des Deckels den Hals des Außenbehälters übergreift und durch die schraubende Drehung am Hals des Außenbehälters fest angezogen wird. Dadurch ergeben sich mehrere ringförmige Dichtkanten, die einen Wärmeausfluß nahezu ausschließen.

Eine sichere Schließwirkung und eine leichte Bedienung wird dadurch erzielt, daß über den Umfang verteilt mehrere Nasen am Außenbehälter vorgesehen sind, die mit je einem Schraubensteg zusammenwirken. Zweckmäßigerweise wird man vier Nasen für eine gute Abdichtung vorsehen.

Eine Verriegelung des Deckels in beliebiger Drehrichtung wird dadurch sichergestellt, daß der Schraubensteg jeweils zwei gegenläufige Abschnitte umfaßt, die durch einen Spalt getrennt sind. Diese leichte Öffnungs- und Schließbetätigung ist für bettlägerige Patienten oder alte und schwache Menschen wichtig und hilfreich.

Ein einfaches Anheben des Deckels wird dadurch erreicht, daß oberhalb des Schraubensteges ein Öffnungssteg angeordnet ist.

Die Handhabung der Isolierkanne wird dadurch erleichtert, daß ein Griff des Deckels einen Steg zum Eingriff in eine Mulde des Henkels uaufweist. Damit wird eine sichere Führung beim Hochschwenken des Deckels in die Ausgießstellung sichergestellt.

Eine Deckelbetätigung mit einer Daumenbewegung wird dadurch ermöglicht, daß am Griff ein Betätigungsansatz als Fingermulde angeformt ist, womit der Deckel um eine Querachse geschwenkt sowie um eine senkrechte Achse gedreht werden kann. Zum dichten Verschließen des Deckels genügt eine geringe Drehung durch eine Daumenbewegung. Auch die Öffnungsstellung wird durch eine geringe Verschwenkung um eine Querachse erreicht.

Ein Ausführungbeispiel der Schraubverbindung am Boden des Kannenkörpers zeichnet sich dadurch aus, daß der Gewindeabschnitt an einem Ring am Boden des Innenbehälters ausgebildet ist.

In anderer Weise ist vorgesehen, daß der Geindeabschnitt am Mantel des Innenbehälters ausgebildet ist.

Eine wirtschaftliche Fertigung wird dadurch erreicht, daß der Gewindeabschnitt auf einem Ring ausgebildet ist, der auf den Mantel des Innenbehälters aufgezogen ist.

Ausführungsbeispiele der Erfindung werden anhand der Zeichnungen erläutert, in denen darstellen:
Fig. 1 einen Teilschnitt durch den Kannenkörper,
Fig. 2 einen Schnitt durch den Deckel und
Fig. 3 eine Unteransicht des Deckels,
Fig. 4 eine Ansicht auf die Henkelseite und
Fig. 5 einen Teilschnitt durch eine weitere Ausführunggsform.

Der Kannenkörper umfaßt einen Außenbehälter 1, Isolierschalen 2, 3 und einen Innenbehälter 4.

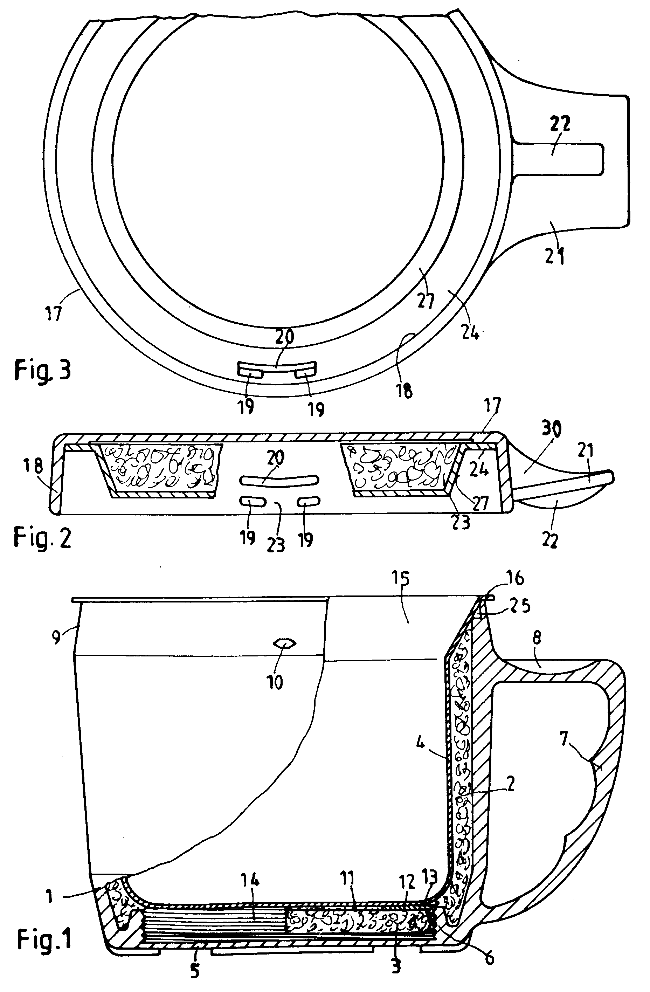

Der Außenbehälter 1 ist ein Formteil aus einem schlagfesten Kunststoff. In der Innenseite des Bodens 5 ist ein Gegengewinde in Form eines Innengewindes 6 ausgebildet. An der Außenwand des Außenbehälters 1 ist ein Henkel 7 angeformt, in dem aufder Oberseite eine Mulde 8 ausgebildet ist. Der Hals 9 des Außenbehälters 1 ist zum Behälterrand verjüngt geformt und weist jeweils um 180° einander gegenüberliegend zwei Nasen 10 auf, von denen in Fig. 1 die vordere Nase sichtbar ist.

Die Isolierschalen 2 und 3 sind als Einlegeteile ausgebildet. Sie bestehen aus einem Schaumstoff oder einem anderen Isolierstoff.

Der Innenbehälter 4 besteht aus Edelstahl und erfüllt somit die hygienischen Anforderungen. Unterhalb des Bodens 11 ist ein Ring 12 mit einem rechtwinklig nach unten abstehenden Mantel 13 angesetzt. Auf der Außenseite des Mantels 13 ist ein zu dem Innengewinde 6 passender Gewindeabschnitt als Außengewinde 14 geformt. Der Innenbehälter 4 weist stirnseitig einen konischen Übergangsabschnitt 15 auf und endet in einen rechtwinklig nach unten abgebogenen Ringrand 16 als Ausgießrand und Dichtrand.

Der Innenbehälter 4 wird mit dem Außengewinde 14 in das Innengewinde 6 eingeschraubt. Der Innenbehälter 4 sitzt so fest innerhalb des Außenbehälters 1. Die Isolierschalen 2, 3 sind festgelegt. Der Ringrand 16 sitzt dichtend auf dem Stirnrand des Außenbehälters 1 auf und dichtet zusammen mit einer in einen Hohlraum 25 eingelegten Ringdichtung die Isolierung gegen Eindringen von Feuchtigkeit ab. Der Innenbehälter 4 kann jederzeit wieder herausgenommen und ausgetauscht werden.

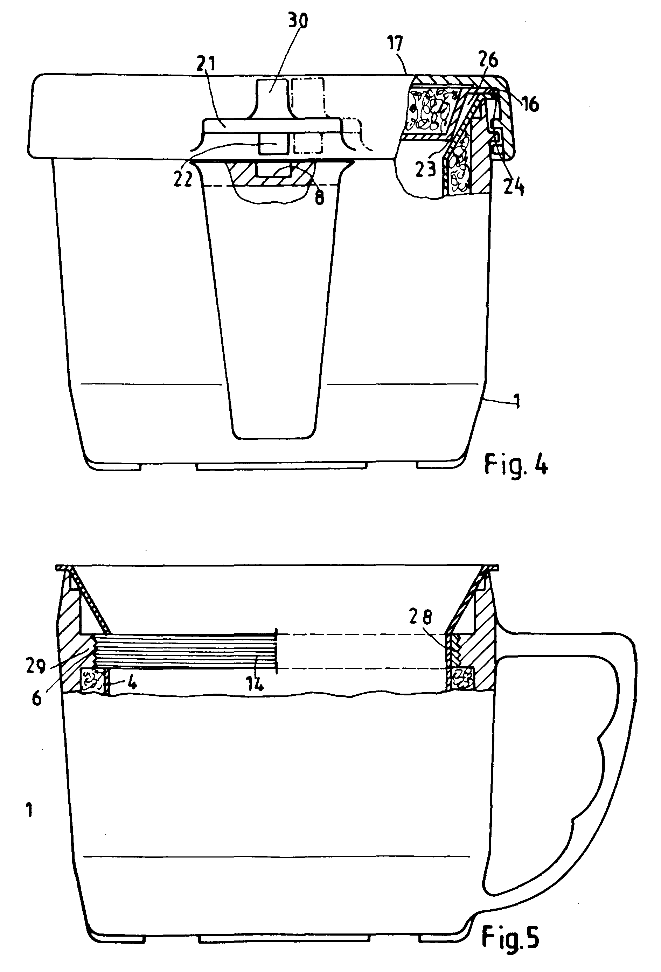

Ein Deckel 17 weist einen nach unten sich erweiternden, konischen Kragen 18 auf. An eine ringförmige Deckelinnenfläche 24, die dem Ringrand 16 des Innenbehälters 4 zugeordnet ist, schließt sich eine Kegelfläche 27 mit einer Dichtkante 23 an, die an dem Übergangsabschnitt 15 zur dichtenden Anlage kommt. Fig. 4 läßt die Abdichtfunktion deutlich erkennen. Ein Ringraum 26 ist sowohl nach innen als auch nach außen abgeschlossen. Auf der Innenwand des Kragens 18 sind einander gegenüberstehend jeweils zwei Schraubenstege 19 mit entgegengesetzter Steigung und ein Öffnungssteg 20 ausgebildet. Die Schraubenstege 19 lassen zwischen sich jeweils einen Spalt 23 frei, durch den die zugehörige Nase 10 hindurchtreten kann. Bei der Drehung des Deckels 17 wird derselbe durch die Wirkung der Schraubenstege 19 entsprechender Steigung festgezogen. Damit ist ein Festziehen des Deckels in beliebiger Drehrichtung möglich, was eine einfache Handhabung gewährleistet. Bei der Rückdrehung des Deckels bewirken die Öffnungsstege 20 ein Anheben des Deckels. Dabei werden Dämpfe aus dem Inneren der Isolierkanne in dem Ringraum 26 gesammelt und abgekühlt. Dort kann sich auch Überdruck abbauen. Dämpfe und auch Flüssigkeit werden durch den Kragen 18 des Deckels nach unten abgeleitet.

An dem Deckel 18 sitzt ein Griff 21 mit einem nach unten gerichteten Steg 22, der beim Niederdrükken des Griffs 21 in die Mulde 8 eintritt, so daß der Deckel 17 um eine Querachse richtungsstabil in die Ausgießstellung geführt bzw. hochgekippt wird und den Ringrand 16 freigibt, über den ein Ausgießen möglich ist. Der Steg 22 dient der Seitenstabilisierung und der Halterung des angehobenen Deckels 18. Ein Betätigungsansatz 30 ist zusammen mit dem Griff 21 als Fingermulde oder Daumenmulde geformt, so daß eine leichte Betätigung des Deckels möglich ist. Der Deckel kann mit einem Finger zum Schließen und Öffnen gedreht und auch zum Ausgießen verschwenkt werden. In Fig. 4 ist in strichtpunktierten Linien eine Drehstellung des Deckels mit dem Griff gezeigt.

Fig. 5 zeigt ein zweites Ausführungsbeispiel mit einer abgewandelten Verschraubung. Ein Ring 29 mit dem Außengewinde 14 ist aufden Mantel des Innenbehälters 4 aufgezogen, aufgepreßt oder durch Punktschweißen befestigt. An einem Ringsteg 29 des Außenbehälters 1 ist das Innengewinde 6 geformt. Diese Verschraubung ist besonders fest. Das Außengewinde 14 kann auch unmittelbar in der Wandung des Innenbehälters 4 ausgebildet sein.

## Patentansprüche

1. Isolierkanne mit einem Kannenkörper aus einem Außenbehälter, einer Isolierschale innerhalb des Außenbehälters und einem Innenbehälter aus Edelstahl, der fest in den Außenbehälter einsetzbar ist, und mit einem Deckel, der den Behälterrand abschließt und einen Griff aufweist, bei dessen Niederdrükken der Deckel in eine angehobene Ausgießstellung gebracht wird, dadurch gekennzeichnet, daß der Innenbehälter (4) einen Gewindeabschnitt (14) aufweist, der in ein Gegengewinde (6) des Außenbehälters (1) eingreift und daß mindestens ein Schraubensteg (19) am Kragen (18) des Deckels (17) mit einer Nase (10) am Hals (9) des Außenbehälters (1) zusammenwirkt.

2. Isolierkanne nach Anspruch 1, dadurch gekennzeichnet, daß ein Kragen (18) des Deckels (17) den Hals (9) des Außenbehälters (1) übergreift und durch die schraubende Drehung am Hals (9) des Außenbehälters (1) fest angezogen wird.

3. Isolierkanne nach Anspruch 1 oder 2, dadurch gekennzeichnet, daß über den Umfang verteilt mehrere Nasen (10) am Außenbehälter (1) vorgesehen sind, die mit je einem Schraubensteg (19) zusammenwirken.

4. Isolierkanne nach Anspruch 3, dadurch gekennzeichnet, daß der Schraubensteg (19) jeweils zwei gegenläufige Abschnitte umfaßt, die durch einen Spalt (23) getrennt sind.

5. Isolierkanne nach Anspruch 4, dadurch gekennzeichnet, daß oberhalb des Schraubensteges (19) ein Öffnungssteg (20) angeordnet ist.

6. Isolierkanne nach einem der Ansprüche 1 bis 5, dadurch gekennzeichnet, daß der Deckel (17) mit einer inneren Kegelfläche (27) an dem Übergangsabschnitt (15) des Innenbehälters (4) anliegt und einen Ringraum (26) begrenzt.

7. Isolierkanne nach einem der Ansprüche 1 bis 6, dadurch gekennzeichnet, daß ein Griff (21) des Deckels (17) einen Steg (22) zum Eingriff in eine Mulde (8) des Henkels (7) aufweist.

8. Isolierkanne nach Anspruch 7, dadurch gekennzeichnet, daß am Griff (21) ein Betätigungsansatz (3) als Fingermulde angeformt ist, womit der Deckel um eine Querachse geschwenkt sowie um eine senkrechte Achse gedreht werden kann.

9. Isolierkanne nach einem der Ansprüche 1 bis 8, dadurch gekennzeichnet, daß der Gewindeabschnitt (14) an einem Ring (12) am Boden (11) des Innenbehälters (4) ausgebildet ist.

10. Isolierkanne nach einem der Ansprüche 1 bis 9, dadurch gekennzeichnet, daß der Gewindeabschnitt (14) am Mantel des Innenbehälters (4) ausgebildet ist.

11. Isolierkanne nach Anspruch 10, dadurch gekennzeichnet, daß der Gewindeabschnitt (14) auf einem Ring (28) ausgebildet ist, der aufden Mantel des Innenbehälters (4) aufgezogen ist.
